# EUROPEAN PATENT APPLICATION

(11) **EP 4 843 954 A1**
(43) Date of publication of application: **25.11.2026**
(21) Application number: 25742023.2
(22) Date of filing: 17.01.2025
(51) Int. Cl.: C01D 15/08, B01D 61/02, C22B 3/22, C22B 3/44, C22B 7/00, C22B 26/12, H01M 10/54

(54) **METHOD FOR PRODUCING LITHIUM CARBONATE**

(30) Priority: 19.01.2024 JP 2024006655; 19.01.2024 JP 2024006659; 19.01.2024 JP 2024006790
(71) Applicant: Mitsubishi Materials Corporation, Tokyo 100-8117 (JP)
(72) Inventor: MURAOKA, Shu, Iwaki-shi, Fukushima 971-8101 (JP); HAYASHI, Hiroshi, Tokyo 100-8117 (JP); SATO, Ryosuke, Iwaki-shi, Fukushima 971-8101 (JP)
(74) Representative: Gille Hrabal Partnerschaftsgesellschaft mbB Patentanwälte
(86) International application number: PCT/JP2025/001347
(87) International publication number: WO 2025/154798

(57) **Abstract**

This method for producing lithium carbonate (S04) includes: a first carbonation reaction step (S41) of generating calcium carbonate by adding a soluble carbonate compound to a lithium-containing liquid in which calcium ions coexist and heating the lithium-containing liquid; a first solid-liquid separation step (S42) of separating the calcium carbonate generated in the first carbonation reaction step (S41) from the lithium-containing liquid; a second carbonation reaction step (S43) of generating lithium carbonate by adding a soluble carbonate compound to the lithium-containing liquid separated in the first solid-liquid separation step (S42) and heating the lithium-containing liquid; and a second solid-liquid separation step (S44) of separating the lithium carbonate generated in the second carbonation reaction step (S43) from a mother liquor.

## Description

### TECHNICAL FIELD

The present invention relates to a method for producing lithium carbonate, which produces lithium carbonate using a lithium-containing liquid as a raw material.

The present application claims priority on Japanese Patent Application No. 2024-006655 filed on January 19, 2024, Japanese Patent Application No. 2024-006659 filed on January 19, 2024, and Japanese Patent Application No. 2024-006790 filed on January 19, 2024, the contents of which are incorporated herein by reference.

### BACKGROUND ART

In recent years, lithium has been recovered and reused from lithium-containing substances such as a pulverized product of a lithium-ion battery.

As a method of recovering lithium from a lithium-containing substance, a method of leaching lithium into an acidic solution by immersing battery scraps obtained by roasting a lithium ion battery waste in an acidic solution and recovering lithium from an obtained lithium leachate is known.

The lithium leachate in which lithium is leached also contains metals other than lithium, such as cobalt and aluminum. Therefore, for example, as disclosed in Patent Document 1, the lithium leachate is neutralized by adding a calcium salt thereto; and thereby, mainly metals other than lithium precipitate, and the lithium solution is further separated from other substances by solid-liquid separation. Next, carbonic acid is added to the lithium solution to recover lithium as lithium carbonate.

### Citation List

### Patent Document

Patent Document 1: Japanese Unexamined Patent Application, First Publication No. 2019-011518

### SUMMARY OF INVENTION

### Technical Problem

Meanwhile, as disclosed in Patent Document 1, in a case where calcium coexists in the lithium solution, when carbonic acid is added thereto, calcium carbonate is preferentially generated, and there is a possibility that the calcium carbonate may be mixed in lithium carbonate as an impurity.

The present invention has been made in view of the above-described circumstances, and an objective of the present invention is to provide a method for producing lithium carbonate, the method being capable of suppressing mixing of calcium carbonate when lithium carbonate is produced from a lithium-containing liquid and obtaining highly pure lithium carbonate.

### Solution to Problem

In order to solve the above-described problem, a method for producing lithium carbonate according to an aspect 1 of the present invention includes: a first carbonation reaction step of generating calcium carbonate by adding a soluble carbonate compound to a lithium-containing liquid in which calcium ions coexist and heating the lithium-containing liquid; a first solid-liquid separation step of separating the calcium carbonate generated in the first carbonation reaction step from the lithium-containing liquid; a second carbonation reaction step of generating lithium carbonate by adding a soluble carbonate compound to the lithium-containing liquid separated in the first solid-liquid separation step and heating the lithium-containing liquid; and a second solid-liquid separation step of separating the lithium carbonate generated in the second carbonation reaction step from a mother liquor.

With the method for producing lithium carbonate according to the aspect 1 of the present invention, because the method includes the first carbonation reaction step of generating calcium carbonate by adding a soluble carbonate compound (water-soluble carbonate compound) and heating the lithium-containing liquid, and the first solid-liquid separation step of separating the calcium carbonate generated in the first carbonation reaction step from the lithium-containing liquid, calcium contained in the lithium-containing liquid can be removed as calcium carbonate in the first carbonation reaction step and the first solid-liquid separation step.

Therefore, in the subsequent second carbonation reaction step, generation of calcium carbonate can be suppressed, and highly pure lithium carbonate can be produced.

A method for producing lithium carbonate according to an aspect 2 of the present invention is characterized in that, in the method for producing lithium carbonate according to the aspect 1, an amount of substance of the soluble carbonate compound added in the first carbonation reaction step and an amount of substance of calcium in the lithium-containing liquid supplied in the first carbonation reaction step are within a range of 1.0 or more and 10.0 or less in terms of a stoichiometric ratio (CO₃²⁻/Ca²⁺).

With the method for producing lithium carbonate according to the aspect 2 of the present invention, because the amount of substance (number of moles) of the soluble carbonate compound added in the first carbonation reaction step and the amount of substance (number of moles) of calcium in the lithium-containing liquid supplied in the first carbonation reaction step are within the range of 1.0 or more and 10.0 or less in terms of a stoichiometric ratio (CO₃²⁻/Ca²⁺) (molar ratio), calcium can be sufficiently removed as calcium carbonate, generation of lithium carbonate in the first carbonation reaction step can be suppressed, and lithium recovery efficiency can be increased.

A method for producing lithium carbonate according to an aspect 3 of the present invention is characterized in that, in the method for producing lithium carbonate according to the aspect 1 or the aspect 2, a pH in the first carbonation reaction step is 9.0 or more and 11.0 or less.

With the method for producing lithium carbonate according to the aspect 3 of the present invention, because the pH in the first carbonation reaction step is 9.0 or more and 11.0 or less, generation of calcium carbonate can be promoted, and calcium can be sufficiently removed by the first carbonation reaction step and the first solid-liquid separation step.

A method for producing lithium carbonate according to an aspect 4 of the present invention is characterized in that, in the method for producing lithium carbonate according to any one of the aspects 1 to 3, the soluble carbonate compound added in the first carbonation reaction step and the second carbonation reaction step is sodium carbonate.

With the method for producing lithium carbonate according to the aspect 4 of the present invention, because the soluble carbonate compound added in the first carbonation reaction step and the second carbonation reaction step is sodium carbonate, calcium carbonate and lithium carbonate can be efficiently deposited.

A method for producing lithium carbonate according to an aspect 5 of the present invention is characterized in that, in the method for producing lithium carbonate according to any one of the aspects 1 to 4, a heating temperature in the first carbonation reaction step is in a range of 40°C or higher and 95°C or lower.

With the method for producing lithium carbonate according to the aspect 5 of the present invention, because the heating temperature in the first carbonation reaction step is within the range of 40°C or higher and 95°C or lower, generation of calcium carbonate can be promoted in the first carbonation reaction step.

A method for producing lithium carbonate according to an aspect 6 of the present invention is characterized in that, in the method for producing lithium carbonate according to any one of the aspects 1 to 5, a heating temperature in the second carbonation reaction step is in a range of 80°C or higher and 95°C or lower.

With the method for producing lithium carbonate according to the aspect 6 of the present invention, because the heating temperature in the second carbonation reaction step is within the range of 80°C or higher and 95°C or lower, generation of lithium carbonate can be promoted in the second carbonation reaction step.

A method for producing lithium carbonate according to an aspect 7 of the present invention is characterized in that, in the method for producing lithium carbonate according to any one of the aspects 1 to 6, a carbonate compound containing the calcium carbonate recovered in the first solid-liquid separation step is returned to the first carbonation reaction step.

With the method for producing lithium carbonate according to the aspect 7 of the present invention, because the carbonate compound containing the calcium carbonate recovered in the first solid-liquid separation step is returned to the first carbonation reaction step, generation of calcium carbonate can be promoted in the first carbonation reaction step by using the returned calcium carbonate as a seed crystal. In addition, lithium carbonate can be returned to the first carbonation reaction step, and lithium recovery efficiency can be improved.

### Advantageous Effects of Invention

According to the aspects of the present invention, it is possible to provide a method for producing lithium carbonate, the method being capable of suppressing mixing of calcium carbonate when lithium carbonate is produced from a lithium-containing liquid and obtaining highly pure lithium carbonate.

### BRIEF DESCRIPTION OF DRAWINGS

[FIG. 1] A flowchart representing a lithium recovery method using the method for producing lithium carbonate according to the embodiment of the present invention.
[FIG. 2] A flowchart representing the impurity removal step in FIG. 1.
[FIG. 3] A flowchart representing the lithium-containing liquid concentration step in FIG. 1.
[FIG. 4] A flowchart representing the method for producing lithium carbonate according to the embodiment of the present invention, the method being applied as the lithium carbonate production step in FIG. 1.
[FIG. 5] A flowchart representing the lithium carbonate purification step in FIG. 1.
[FIG. 6] A graph representing a relationship between a pH of a liquid and a lithium concentration in the liquid in a bicarbonation step.
[FIG. 7] A graph representing a relationship between a Li concentration in a simulated liquid and a reaction time in a second carbonation reaction step in Test Example A of Example 2.
[FIG. 8] A graph representing a relationship between a Li concentration in a simulated liquid and a reaction time in a second carbonation reaction step in Test Example B of Example 2.

### DESCRIPTION OF EMBODIMENTS

Hereinafter, a method for producing lithium carbonate according to an embodiment of the present invention will be described with reference to the drawings. Note that each of the embodiments shown below is specifically described for better understanding of the features of the invention, and does not limit the present invention unless otherwise specified. In addition, "solution" described in the specification is an aqueous solution.

The method for producing lithium carbonate according to the present embodiment is applicable to, for example, a process of recovering lithium from a lithium-containing substance such as a pulverized product of a discarded lithium-ion battery.

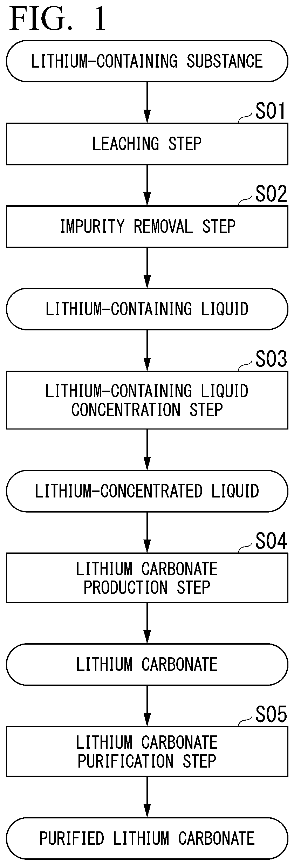

First, a lithium recovery method to which the method for producing lithium carbonate according to the present embodiment is applied will be described with reference to FIG. 1.

As shown in FIG. 1, the lithium recovery method includes a leaching step S01, an impurity removal step S02, a lithium-containing liquid concentration step S03, a lithium carbonate production step S04, and a lithium carbonate purification step S05.

### (Leaching step S01)

In the leaching step S01, a lithium-containing substance such as a pulverized product of a lithium-ion battery is immersed in an acidic solution to leach lithium into the acidic solution; and thereby, a lithium leachate (Li leachate) is obtained. As the acidic solution, for example, inorganic acids such as hydrochloric acid, sulfuric acid, and nitric acid can be used alone, or a mixture of two or more inorganic acids can be used.

In the present embodiment, sulfuric acid is used as the acid. In the present embodiment, the lithium-containing substance and the sulfuric acid are mixed and stirred (stirring time: 30 minutes or longer and 20 hours or shorter) to dissolve lithium in the lithium-containing substance; and thereby, the lithium leachate is obtained.

A pH of the lithium leachate is not particularly limited, and is, for example, 1.0 or more and 2.0 or less. In addition, metals other than lithium, fluorine, and the like are also leached into the leachate. The metals contained in the leachate differ depending on the lithium-containing substance to be used, and examples thereof include cobalt, nickel, and manganese, which are used as a positive electrode active material; and copper, aluminum, and iron, which are used as a current collector or an exterior material of a battery.

### (Impurity removal step S02)

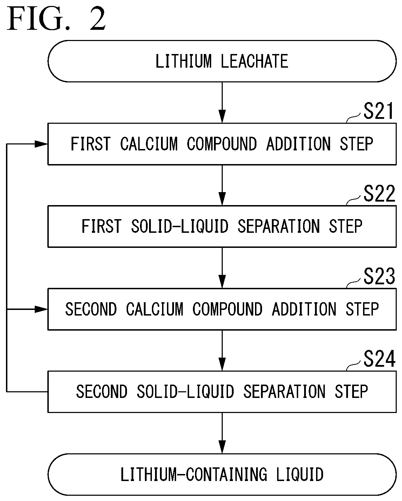

Next, impurities contained in the lithium leachate are removed. In the impurity removal step S02, as shown in FIG. 2, a first calcium compound addition step S21, a first solid-liquid separation step S22, a second calcium compound addition step S23, and a second solid-liquid separation step S24 are provided.

In the first calcium compound addition step S21, a first calcium compound is added to the lithium leachate to generate metal hydroxides and calcium fluoride. These metal hydroxides and calcium fluoride are deposited in the liquid as a solid phase to be precipitated.

The first calcium compound may be added, for example, while the lithium leachate is stirred. The first calcium compound is not particularly limited as long as the first calcium compound is basic, and for example, a solid calcium compound such as calcium carbonate, calcium hydroxide, calcium oxide, or a mixture thereof can be used. A pH of the lithium leachate when the metal hydroxides and calcium fluoride are generated is adjusted to 8.0 or more and 12.0 or less.

In the first solid-liquid separation step S22, the metal hydroxides and calcium fluoride generated in the first calcium compound addition step S21 are removed from the lithium leachate. As a method of removing the metal hydroxides and calcium fluoride, an existing solid-liquid separation method such as a gravity sedimentation separation method, a centrifugal separation method, and a filter cloth filtration method such as a filter press can be appropriately selected and used.

In the second calcium compound addition step S23, a second calcium compound is added to the lithium leachate after the precipitate is removed in the first solid-liquid separation step S22 to precipitate dissolved fluorine. The second calcium compound is not particularly limited as long as it is a basic calcium compound capable of controlling the pH to 5.0 or more and 9.0 or less; for example, a solid calcium compound such as calcium carbonate, calcium hydroxide, calcium oxide, and a mixture thereof can be used.

When generating the precipitate of dissolved fluorine (for example, calcium fluoride), at first, aluminum sulfate is added to make the pH 5.0 or less, and then the pH of the lithium leachate is adjusted to be 5.0 or more and 9.0 or less by adding the second calcium compound. As a result, dissolved fluorine that cannot be completely removed in the first calcium compound addition step S21 and the first solid-liquid separation step S22 can be precipitated as the precipitate of dissolved fluorine. A part of an unreacted second calcium compound precipitates together with the precipitate of dissolved fluorine.

A pH of the lithium leachate in the second calcium compound addition step S23 is more preferably 6.5 or more, and still more preferably 7.0 or more. In addition, the pH of the lithium leachate in the second calcium compound addition step S23 is more preferably 8.0 or less, and still more preferably 7.5 or less.

In the second solid-liquid separation step S24, the precipitate of dissolved fluorine and an unreacted substance of the second calcium compound, which are precipitated in the second calcium compound addition step S23, are removed from the lithium leachate to obtain a lithium-containing liquid. As a method of removing the precipitates, an existing solid-liquid separation method such as a gravity sedimentation separation method, a centrifugal separation method, and a filter cloth filtration method such as a filter press can be appropriately selected and used.

Here, in the impurity removal step S02, in order to reduce chemical costs and the amount of sludge generated, the precipitate of dissolved fluorine and the unreacted substance of the second calcium compound, which are separated and recovered in the second solid-liquid separation step S24, may be used as the first calcium compound to be added in the first calcium compound addition step S21. In addition, as the second calcium compound to be added in the second calcium compound addition step S23, calcium carbonate obtained in a solid-liquid separation step S32 after a carbonation reaction step S31, which will be described later, or calcium carbonate obtained in a first solid-liquid separation step S42 after a first carbonation reaction step S41, which will be described later, may be used. Furthermore, in the second calcium compound addition step S23, solids removed in the second solid-liquid separation step S24 may be used as a seed crystal.

By the above-described steps, a lithium-containing liquid containing lithium can be obtained from the lithium-containing substance. Here, calcium remains in the lithium-containing liquid obtained by the above-described impurity removal step S02. That is, lithium ions and calcium ions coexist in the lithium-containing liquid.

### (Lithium-containing liquid concentration step S03)

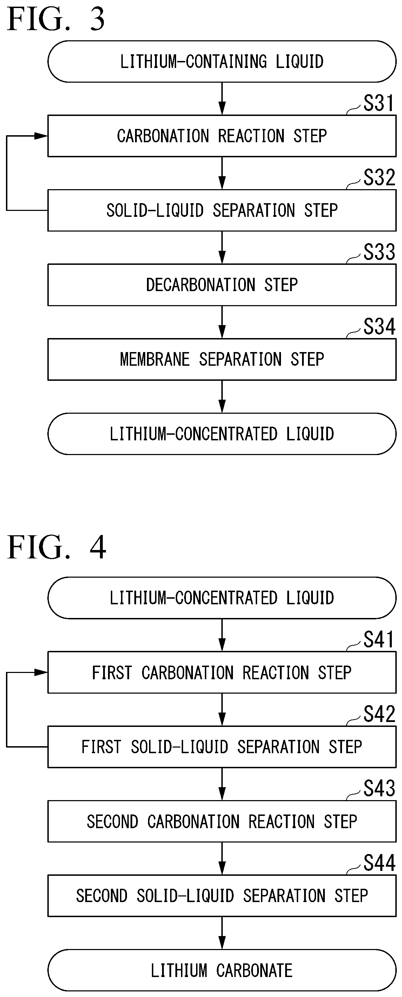

Next, the lithium ions contained in the obtained lithium-containing liquid are concentrated to obtain a lithium-concentrated liquid. In the lithium-containing liquid concentration step S03, as shown in FIG. 3, a carbonation reaction step S31, a solid-liquid separation step S32, a decarbonation step S33, and a membrane separation step S34 are provided.

In the carbonation reaction step S31, a soluble carbonate compound (water-soluble carbonate compound) is added to the lithium-containing liquid to precipitate dissolved calcium as calcium carbonate. As the soluble carbonate compound, for example, sodium carbonate or sodium hydrogen carbonate can be used as a solution or a powder. Alternatively, carbon dioxide gas may be directly blown into the lithium-containing liquid. The reaction is preferably performed at a temperature of 5°C or higher and 50°C or lower, and particularly preferably 10°C or higher and 30°C or lower. When the temperature of the solution is lower than 5°C, it is not preferable since reaction efficiency deteriorates. In addition, when the temperature of the solution is higher than 50°C, precipitation of lithium carbonate is promoted and thus the lithium carbonate also precipitates; and thereby, loss of lithium is caused, which is not preferable.

Here, in the carbonation reaction step S31, it is preferable that an amount of substance (number of moles) of the added soluble carbonate compound and an amount of substance (number of moles) of calcium in the lithium-containing liquid are within a range of 1.0 or more and 10.0 or less in terms of stoichiometric ratio (CO₃²⁻/Ca²⁺) (molar ratio).

When the stoichiometric ratio (CO₃²⁻/Ca²⁺) is 1.0 or more, calcium ions can be sufficiently deposited as calcium carbonate. On the other hand, when the stoichiometric ratio (CO₃²⁻/Ca²⁺) is 10.0 or less, deposition of lithium as lithium carbonate can be suppressed.

The stoichiometric ratio (CO₃²⁻/Ca²⁺) in the carbonation reaction step S31 is more preferably 2.0 or more, and still more preferably 3.0 or more. In addition, the stoichiometric ratio (CO₃²⁻/Ca²⁺) in the carbonation reaction step S31 is more preferably 7.0 or less, and still more preferably 5.0 or less.

Further, before adding the soluble carbonate compound, calcium carbonate may be added as seed crystals. In addition, aluminum sulfate may be added together with a polymer flocculant as an agglomeration agent. By adding aluminum sulfate, the deposited calcium carbonate can be agglomerated into larger flocs so as not to remain in the supernatant, and solid-liquid separation can be performed more reliably even when the solid-liquid separation is performed by a gravity sedimentation separation method using a thickener or the like.

A concentration of the aluminum sulfate in the lithium-containing liquid is preferably 0 mg/L or more and 110 mg/L or less, and more preferably 27 mg/L or more and 83 mg/L or less. When the concentration of the aluminum sulfate is less than 27 mg/L, agglomeration is insufficient, which is not preferable. When the concentration of the aluminum sulfate is more than 110 mg/L, the bulk of solids including the deposited calcium carbonate increases, so that the sedimentation facilities must be scaled up in order to perform the solid-liquid separation sufficiently by the gravity sedimentation separation method, which is not preferable.

Examples of the polymer flocculant include DIAFLOC AP825 manufactured by MT AquaPolymer, Inc. and DIAFLOC NP500 manufactured by MT AquaPolymer, Inc. A concentration of the polymer flocculant in the lithium-containing liquid is preferably 1 to 10 ppm. For example, 2 mL of a solution of AP825 having a concentration of 0.05% is added per 1 L of the lithium-containing liquid. In addition, 1 mL of a solution of NP500 having a concentration of 0.1% is added per 1 L of the lithium-containing liquid.

Here, in the carbonation reaction step S31, it is preferable to set the pH of the lithium-containing liquid to be in a range of 8.0 or more and 12.0 or less.

By setting the pH of the lithium-containing liquid within the range of 8.0 or more and 12.0 or less, generation of calcium carbonate can be promoted.

The pH of the lithium-containing liquid in the carbonation reaction step S31 is more preferably 9.0 or more, and still more preferably 10.0 or more. In addition, the pH of the lithium-containing liquid in the carbonation reaction step S31 is more preferably 11.0 or less.

In addition, it is preferable that, in the lithium-containing liquid to be treated, a lithium concentration is 1 g/L or more and 15 g/L or less, and a calcium concentration is 10 mg/L or more and 100 mg/L or less.

The lithium concentration in the lithium-containing liquid to be treated is more preferably 1 g/L or more, and still more preferably 5 g/L or more. In addition, the lithium concentration in the lithium-containing liquid to be treated is more preferably 15 g/L or less, and still more preferably 13 g/L or less.

Furthermore, the calcium concentration in the lithium-containing liquid to be treated is more preferably 10 mg/L or more, and still more preferably 20 mg/L or more. In addition, the calcium concentration in the lithium-containing liquid to be treated is preferably 100 mg/L or less, and more preferably 50 mg/L or less.

In the solid-liquid separation step S32, the calcium carbonate generated in the carbonation reaction step S31 is separated from the lithium-containing liquid. As a method of separating the calcium carbonate and the lithium-containing liquid, an existing solid-liquid separation method such as a gravity sedimentation separation method, a centrifugal separation method, and a filter cloth filtration method such as a filter press can be appropriately selected and used.

In the decarbonation step S33, an inorganic acid is added to the lithium-containing liquid separated in the solid-liquid separation step S32 to remove dissolved carbonate compounds from the lithium-containing liquid as carbon dioxide gas.

As the inorganic acid to be added, for example, sulfuric acid, nitric acid, hydrochloric acid, and a mixed acid of two or more selected therefrom can be used.

Here, in the decarbonation step S33, it is preferable that a pH of the lithium-containing liquid is within a range of 3.0 or more and 7.0 or less.

By setting the pH of the lithium-containing liquid to 3.0 or more, it is possible to suppress damage to the reverse osmosis membrane due to an acid in the membrane separation step S34 described later. On the other hand, by setting the pH of the lithium-containing liquid to 7.0 or less, generation of carbon dioxide gas can be promoted. As a result, since the carbonate compounds can be sufficiently removed as carbon dioxide gas from the lithium-containing liquid in the decarbonation step S33, damage to the reverse osmosis membrane due to deposition of calcium carbonate in the membrane separation step S34 can be suppressed.

The pH of the lithium-containing liquid in the decarbonation step S33 is more preferably 3.0 or more, and still more preferably 6.0 or more. In addition, the pH of the lithium-containing liquid in the decarbonation step S33 is more preferably 7.0 or less, and still more preferably 6.5 or less.

In the membrane separation step S34, after the decarbonation step S33, lithium ions in the lithium-containing liquid are concentrated using a reverse osmosis membrane. As the reverse osmosis membrane, for example, a reverse osmosis membrane having a structure such as a hollow fiber type, a spiral type, or a tubular type made of a material such as cellulose acetate can be used.

Here, in the lithium-concentrated liquid obtained in the membrane separation step S34, the lithium concentration is preferably 18 g/L or more. In addition, an upper limit value of the lithium concentration in the lithium-concentrated liquid is preferably 35 g/L or less in view of solubility of lithium sulfate.

Through the above-described steps, the lithium-concentrated liquid in which the lithium ions in the lithium-containing liquid are concentrated is produced. The calcium ions may remain in the lithium-concentrated liquid.

### (Lithium carbonate production step S04)

Next, lithium carbonate is produced using the lithium-concentrated liquid containing lithium as a raw material. The method for producing lithium carbonate according to the embodiment of the present invention is applied to the lithium carbonate production step S04.

In the method for producing lithium carbonate according to the present embodiment (lithium carbonate production step S04), as shown in FIG. 4, a first carbonation reaction step S41, a first solid-liquid separation step S42, a second carbonation reaction step S43, and a second solid-liquid separation step S44 are provided.

In the first carbonation reaction step S41, calcium carbonate is generated by adding a first soluble carbonate compound (first water-soluble carbonate compound) to a lithium-concentrated liquid in which lithium ions and calcium ions coexist, and heating the lithium-concentrated liquid. In the first carbonation reaction step S41, the lithium-concentrated liquid may be heated after the first soluble carbonate compound is added, or the first soluble carbonate compound may be added while the lithium-concentrated liquid is being heated.

As the first soluble carbonate compound, for example, sodium carbonate or sodium hydrogen carbonate can be used in the form of a solution or powder. Alternatively, carbon dioxide gas may be blown in and dissolved so that dissolved calcium reacts therewith.

Here, in the first carbonation reaction step S41, it is preferable that an amount of substance (number of moles) of the added first soluble carbonate compound and an amount of substance (number of moles) of calcium in the lithium-concentrated liquid are within a range of 1.0 or more and 10.0 or less in terms of stoichiometric ratio (CO₃²⁻/Ca²⁺) (molar ratio).

When the stoichiometric ratio (CO₃²⁻/Ca²⁺) is 1.0 or more, calcium ions can be sufficiently deposited as calcium carbonate. On the other hand, when the stoichiometric ratio (CO₃²⁻/Ca²⁺) is 10.0 or less, deposition of lithium as lithium carbonate can be suppressed.

The stoichiometric ratio (CO₃²⁻/Ca²⁺) in the first carbonation reaction step S41 is more preferably 2.0 or more, and still more preferably 3.0 or more. In addition, the stoichiometric ratio (CO₃²⁻/Ca²⁺) in the first carbonation reaction step S41 is more preferably 7.0 or less, and still more preferably 5.0 or less.

In the first carbonation reaction step S41, a pH of the lithium-concentrated liquid is preferably 9.0 or more and 11.0 or less.

By setting the pH of the lithium-concentrated liquid in the first carbonation reaction step S41 to 9.0 or more and 11.0 or less, generation of calcium carbonate can be promoted.

The pH of the lithium-concentrated liquid in the first carbonation reaction step S41 is more preferably 9.5 or more, and still more preferably 10.0 or more.

In the first carbonation reaction step S41, a heating temperature is preferably within a range of 40°C or higher and 95°C or lower.

By setting the heating temperature in the first carbonation reaction step S41 to 40°C or higher, generation of calcium carbonate can be promoted. On the other hand, by setting the heating temperature in the first carbonation reaction step S41 to 95°C or lower, an increase in pressure in a reaction tank can be suppressed, so that the first carbonation reaction step S41 can be stably performed.

The heating temperature in the first carbonation reaction step S41 is more preferably 60°C or higher, and still more preferably 90°C or higher.

In the first solid-liquid separation step S42, the calcium carbonate generated in the first carbonation reaction step S41 is separated from the lithium-concentrated liquid. As a method of separating the calcium carbonate and the lithium-concentrated liquid, an existing solid-liquid separation method such as a gravity sedimentation separation method, a centrifugal separation method, and a filter cloth filtration method such as a filter press can be appropriately selected and used.

In the second carbonation reaction step S43, lithium carbonate is generated by adding a second soluble carbonate compound (second water-soluble carbonate compound) to the lithium-concentrated liquid from which calcium carbonate has been separated, and heating the lithium-concentrated liquid.

As the second soluble carbonate compound, for example, sodium carbonate or sodium hydrogen carbonate may be used. Examples of the form of the second soluble carbonate compound include powder, slurry, and solution. The slurry includes an aqueous solution and particles of the second soluble carbonate compound, and the particles of the second soluble carbonate compound in an amount equal to or more than solubility are in a state of not being dissolved in the aqueous solution. Alternatively, carbon dioxide gas may be blown in and dissolved so that dissolved calcium reacts therewith.

The form of the second soluble carbonate compound is preferably a powder form. As a result, the amount of impurities (SO₄²⁻, Zn, Na, and the like) contained in the generated lithium carbonate can be reduced. When the form of the second soluble carbonate compound is powder, an average particle size thereof is preferably 10 to 100 µm. The average particle size is D50 (median diameter) on a volume basis, which is measured by a laser diffraction scattering method.

Regarding the amount of the second soluble carbonate compound to be added, it is preferable to adjust the amount of the second soluble carbonate compound such that the ratio (CO₃²⁻/2Li⁺) of the amount (number of moles) of carbonate ions (CO₃²⁻) in the second soluble carbonate compound to twice the amount (number of moles) of lithium ions contained in the lithium-concentrated liquid is 1.0 or more and 5.0 or less. As a result, the amount of Ca and Al contained in the generated lithium carbonate can be reduced.

An addition rate of the second soluble carbonate compound (amount added per second relative to 8 g of Li in the lithium-concentrated liquid) is preferably 0.05 to 1 g/s. As a result, the amount of impurities (SO₄²⁻, Zn, Na, and the like) contained in the generated lithium carbonate can be reduced.

When the form of the second soluble carbonate compound is slurry or solution, the addition rate of the second soluble carbonate compound is a value converted in terms of the amount of the second soluble carbonate compound contained in the slurry or solution, and can also be said to be the addition rate of the second soluble carbonate compound contained in the slurry or solution.

In the second carbonation reaction step S43, the lithium-concentrated liquid may be heated after the second soluble carbonate compound is added, or the second soluble carbonate compound may be added while the lithium-concentrated liquid is being heated. However, as described later, it is preferable to heat the lithium-concentrated liquid after the second soluble carbonate compound is added at a temperature of 15°C to 25°C (room temperature).

A heating temperature in the second carbonation reaction step S43 is preferably within a range of 80°C or higher and 95°C or lower.

By setting the heating temperature in the second carbonation reaction step S43 to 80°C or higher, generation of lithium carbonate can be promoted. On the other hand, by setting the heating temperature in the second carbonation reaction step S43 to 95°C or lower, an increase in pressure in the reaction tank can be suppressed, so that the second carbonation reaction step S43 can be stably performed.

The heating temperature in the second carbonation reaction step S43 is more preferably 85°C or higher, and still more preferably 90°C or higher.

When sodium carbonate is added, the lower the temperature of the lithium-concentrated liquid, the more moderate the crystal growth of the generated lithium carbonate becomes, and the amount of impurities contained can be reduced. However, in order to generate lithium carbonate at a high recovery rate, it is necessary to heat the lithium-concentrated liquid. Therefore, at the stage of adding the second soluble carbonate compound to the lithium-concentrated liquid, the temperature of the lithium-concentrated liquid is preferably 15°C to 25°C. After the second soluble carbonate compound is added to the lithium-concentrated liquid, the temperature of the lithium-concentrated liquid is preferably within the range of 80°C or higher and 95°C or lower. As a result, the amount of impurities (SO₄²⁻, Zn, Na, and the like) contained in the generated lithium carbonate can be reduced.

The amount of sulfate ions (SO₄²⁻) contained in the generated lithium carbonate is preferably 1% by mass or less.

Here, in the lithium carbonate production step S04, it is preferable that carbonate compounds containing the calcium carbonate recovered in the first solid-liquid separation step S42 are returned to the first carbonation reaction step S41.

In the first carbonation reaction step S41, generation of calcium carbonate can be promoted by using the returned calcium carbonate as a seed crystal. In addition, lithium carbonate generated together with the calcium carbonate can be returned to the first carbonation reaction step S41, and the lithium recovery efficiency can be improved.

In the second solid-liquid separation step S44, the lithium carbonate generated in the second carbonation reaction step S43 is separated from a mother liquor. As a method of separating the lithium carbonate, an existing solid-liquid separation method such as a gravity sedimentation separation method, a centrifugal separation method, and a filter cloth filtration method such as a filter press can be appropriately selected and used.

Through the above-described steps, lithium carbonate is produced. The lithium carbonate may contain calcium in an amount of 400 mass ppm or more.

### (Lithium carbonate purification step S05)

Next, purification of the lithium carbonate is performed in order to further improve the purity of the lithium carbonate obtained by the lithium carbonate production step S04.

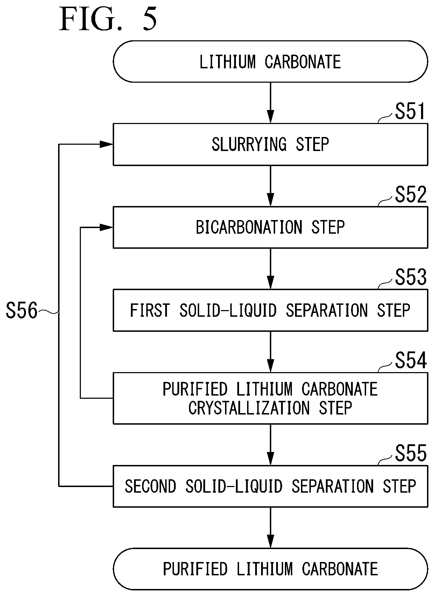

In the lithium carbonate purification step S05, as shown in FIG. 5, a slurrying step S51, a bicarbonation step S52, a first solid-liquid separation step S53, a purified lithium carbonate crystallization step S54, a second solid-liquid separation step S55, and a mother liquor return step S56 are provided.

In the slurrying step S51, water is added to the above-described lithium carbonate to generate a lithium carbonate slurry. The lithium carbonate contains, for example, calcium in an amount of 400 mass ppm or more. The amount of calcium contained in the lithium carbonate is preferably 5000 mass ppm or less. When the amount of calcium is more than 5000 mass ppm, the amount of residual calcium is large, and clogging is likely to occur when the solids (calcium carbonate) are separated by filtration in the first solid-liquid separation step S53 described later.

Here, in the lithium carbonate slurry generated in the slurrying step S51, the concentration of lithium carbonate is preferably within a range of 30 g/L or more and 45 g/L or less.

By setting the concentration of lithium carbonate in the lithium carbonate slurry within the above-described range, it is possible to sufficiently generate lithium bicarbonate in the bicarbonation step S52 described later and to prevent lithium carbonate from remaining; and thereby, it is possible to more efficiently produce purified lithium carbonate.

The concentration of lithium carbonate in the lithium carbonate slurry is more preferably 35 g/L or more, and still more preferably 38 g/L or more. In addition, the concentration of lithium carbonate in the lithium carbonate slurry is more preferably 44 g/L or less, and still more preferably 43 g/L or less.

In the bicarbonation step S52, CO₂ gas is blown into the above-described lithium carbonate slurry to generate soluble lithium bicarbonate; and thereby, a lithium bicarbonate liquid is obtained. That is, as shown in Formula (1), solid lithium carbonate reacts with the carbon dioxide gas to become lithium bicarbonate, and dissolves in water as a solvent, so that a lithium bicarbonate liquid is generated.

Li₂CO₃ + H₂O + CO₂ → 2LiHCO₃ ... (1)

Here, in the bicarbonation step S52, the pH is preferably 7.5 or more and 12 or less.

In the bicarbonation step S52, as the CO₂ gas is blown in, lithium bicarbonate dissolves in the liquid, and the pH of the lithium bicarbonate liquid decreases.

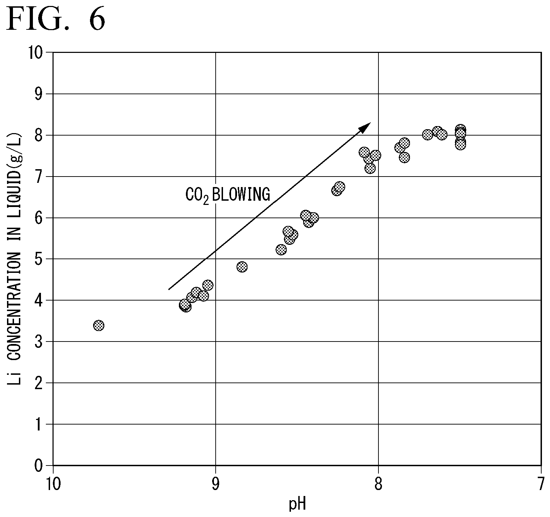

FIG. 6 shows a relationship between the pH of the lithium bicarbonate liquid and the lithium concentration in the liquid. As the pH of the lithium bicarbonate liquid decreases due to blowing-in of CO₂ gas, the lithium concentration in the liquid increases; but when the pH becomes less than 7.5, no increase in the lithium concentration is observed.

Therefore, by setting the pH to 7.5 or more in the bicarbonation step S52, the amount of CO₂ gas used can be reduced, contamination of calcium as calcium bicarbonate in the bicarbonation step S52 can be suppressed, and purified lithium carbonate having higher purity can be produced.

In the bicarbonation step S52, the pH at the time when the blowing-in of CO₂ gas is stopped is preferably 7.5 or more and less than 8.0.

In addition, in the bicarbonation step S52, the liquid temperature is preferably 5°C or higher and 30°C or lower.

In the bicarbonation step, when the CO₂ gas reacts with the lithium carbonate to generate lithium bicarbonate, the liquid temperature rises due to reaction heat. Since the lithium carbonate dissolved in the solution has a property that its solubility decreases as the liquid temperature rises, the lithium carbonate may be deposited when the liquid temperature rises. In this case, calcium carbonate in the lithium carbonate slurry is also entrained and co-deposited, and deposits called scales (calcium carbonate and lithium carbonate) are generated on surfaces of a tank and a stirring blade. By setting the liquid temperature to 30°C or lower in the bicarbonation step S52, generation of scales can be suppressed in the bicarbonation step S52, and the lithium bicarbonate liquid can be obtained stably.

In consideration of energy cost and the capability of the cooling apparatus, the liquid temperature is preferably 5°C or higher.

In the first solid-liquid separation step S53, the lithium bicarbonate liquid generated in the bicarbonation step S52 is separated from remaining solids (calcium carbonate). As a method of separating the lithium bicarbonate liquid and the residual solids, an existing solid-liquid separation method such as a gravity sedimentation separation method, a centrifugal separation method, and a filter cloth filtration method such as a filter press can be appropriately selected and used.

In the purified lithium carbonate crystallization step S54, the lithium bicarbonate liquid after removal of calcium carbonate is heated to decompose lithium bicarbonate and deposit purified lithium carbonate. That is, as shown in Formula (2), by heating and releasing carbon dioxide gas from lithium bicarbonate, lithium carbonate is deposited.

2LiHCO₃ → Li₂CO₃ + H₂O + CO₂ ... (2)

Here, in the purified lithium carbonate crystallization step S54, the liquid temperature is preferably within a range of 85°C or higher and 98°C or lower.

By setting the liquid temperature to 85°C or higher, decomposition of lithium bicarbonate is promoted, and purified lithium carbonate can be efficiently deposited. In addition, by setting the liquid temperature to 98°C or lower, an increase in pressure in the reaction tank is suppressed, and the purified lithium carbonate crystallization step S54 can be stably performed.

The liquid temperature in the purified lithium carbonate crystallization step S54 is more preferably 87°C or higher, and still more preferably 90°C or higher. In addition, the liquid temperature in the purified lithium carbonate crystallization step S54 is more preferably 97°C or lower, still more preferably 96°C or lower, and even more preferably 95°C or lower.

In addition, it is preferable that carbon dioxide gas (CO₂ gas) generated in the purified lithium carbonate crystallization step S54 is used in the bicarbonation step S52. As a result, the amount of CO₂ gas used can be suppressed, and operating cost can be reduced.

In the second solid-liquid separation step S55, the purified lithium carbonate generated in the purified lithium carbonate crystallization step S54 is separated from the mother liquor. As a method of separating the purified lithium carbonate and the mother liquor, an existing solid-liquid separation method such as a gravity sedimentation separation method, a centrifugal separation method, and a filter cloth filtration method such as a filter press can be appropriately selected and used.

In the mother liquor return step S56, the mother liquor from which the purified lithium carbonate has been separated in the second solid-liquid separation step S55 is returned to the slurrying step S51.

Since lithium remains in the mother liquor from which the purified lithium carbonate has been separated in the second solid-liquid separation step S55, by returning the mother liquor to the slurrying step S51, the remaining lithium can be contained in the lithium carbonate slurry serving as a raw material, and lithium recovery efficiency can be improved.

Through the above-described steps, highly pure purified lithium carbonate can be recovered from a lithium-containing substance such as a pulverized product of a discarded lithium-ion battery.

With the method for producing a lithium carbonate according to the present embodiment, which is applied as the lithium carbonate production step S04, the method includes the first carbonation reaction step S41 of generating calcium carbonate by adding a soluble carbonate compound and heating the lithium-containing liquid, and the first solid-liquid separation step S42 of separating the calcium carbonate generated in the first carbonation reaction step S41 from the lithium-containing liquid, so that calcium contained in the lithium-containing liquid can be removed as calcium carbonate in the first carbonation reaction step S41 and the first solid-liquid separation step S42.

Therefore, in the subsequent second carbonation reaction step S43, generation of calcium carbonate can be suppressed, and highly pure lithium carbonate can be produced.

In the present embodiment, when the amount of substance (number of moles) of the first soluble carbonate compound added in the first carbonation reaction step S41 and the amount of substance (number of moles) of calcium in the lithium-containing liquid supplied to the first carbonation reaction step S41 are within a range of 1.0 or more and 10.0 or less in terms of a stoichiometric ratio (CO₃²⁻/Ca²⁺) (molar ratio), calcium in the lithium-containing liquid can be sufficiently removed as calcium carbonate, generation of lithium carbonate in the first carbonation reaction step S41 can be suppressed, and lithium recovery efficiency can be improved.

In the present embodiment, when the pH in the first carbonation reaction step S41 is 9.0 or more and 11.0 or less, generation of calcium carbonate in the first carbonation reaction step S41 can be promoted, and calcium can be sufficiently removed by the subsequent first solid-liquid separation step S42.

In the present embodiment, when the first and second soluble carbonate compounds added in the first carbonation reaction step S41 and the second carbonation reaction step S43 are sodium carbonate, efficient deposition of calcium and lithium in the lithium-containing liquid as calcium carbonate and lithium carbonate can be achieved.

In the present embodiment, when the heating temperature in the first carbonation reaction step S41 is within a range of 40°C or higher and 95°C or lower, generation of calcium carbonate in the first carbonation reaction step S41 can be promoted.

In the present embodiment, when the heating temperature in the second carbonation reaction step S43 is within a range of 80°C or higher and 95°C or lower, generation of lithium carbonate in the second carbonation reaction step S43 can be promoted.

In the present embodiment, when the carbonate compound containing the calcium carbonate recovered in the first solid-liquid separation step S42 is returned to the first carbonation reaction step S41, generation of calcium carbonate in the first carbonation reaction step S41 can be promoted by using the returned calcium carbonate as a seed crystal. In addition, lithium carbonate can be returned to the first carbonation reaction step S41, and lithium recovery efficiency can be improved.

Hereinabove, the embodiment of the present invention has been described; however, the present invention is not limited thereto, and can be modified as appropriate without departing from the technical features of the invention. In the present embodiment, as described above, the description has been made on the assumption that the present embodiment is applied to the lithium carbonate production step S04 of the lithium recovery method including the leaching step S01, the impurity removal step S02, the lithium-containing liquid concentration step S03, the lithium carbonate production step S04, and the lithium carbonate purification step S05; however, the present embodiment is not limited thereto, and there is no particular limitation as long as lithium carbonate is produced using a lithium-containing liquid containing lithium as a target.

### Examples

Hereinafter, results of confirmation experiments performed to confirm effectiveness of the present invention will be described.

### (Example 1)

### (Inventive Example 1)

A used lithium-ion battery was roasted in a non-oxidizing atmosphere, and then crushed and sorted to obtain black mass powder (hereinafter, referred to as BM). The BM was introduced into a sulfuric acid solution and stirred to leach lithium contained in the BM into the sulfuric acid solution. Thereafter, calcium hydroxide was added to the sulfuric acid solution containing the BM, and a pH of the liquid was adjusted to an alkaline range; and whereby, metals other than lithium, which had been leached during the lithium leaching process, were precipitated as solids. Solid-liquid separation was performed using a suction filter to obtain a lithium leachate (Li leachate). Table 1 shows a chemical composition of the metal components contained in the obtained lithium leachate. This chemical composition was measured by ICP optical emission spectroscopy (ICAP7600 DUO manufactured by THERMO SCIENTIFIC).

**[Table 1]**

| Component | Li | Ni | Co | Mn | Ca | Na | SO₄ |
|---|---|---|---|---|---|---|---|
| Concentration (g/L) | 8.04 | < 0.001 | < 0.001 | 0.008 | 0.44 | 0.1 | 55.9 |

### (First carbonation reaction step)

5.8 g of sodium carbonate (molar ratio CO₃²⁻/Ca²⁺ = 5.0) was added to 1 L of the obtained lithium leachate, and the mixture was reacted at a liquid temperature of 90°C for 30 minutes. The pH in the first carbonation reaction step was 9.0 to 10.0. After 30 minutes, the generated precipitate was subjected to solid-liquid separation using a suction filter to obtain a process discharge after removing Ca and a Ca precipitate. The Ca precipitate was dried in a constant-temperature dryer at 105°C for 12 hours. Table 2 shows a chemical composition of the obtained process discharge after removing Ca, and Table 3 shows a chemical composition of the Ca precipitate after drying.

**[Table 2]**

| Component | Li | Ni | Co | Mn | Ca | Na | SO₄ |
|---|---|---|---|---|---|---|---|
| Concentration (g/L) | 7.65 | < 0.001 | < 0.001 | 0.007 | 0.013 | 2.3 | 55.1 |

**[Table 3]**

| Component | Li | Ni | Co | Mn | Ca | Na | SO₄ |
|---|---|---|---|---|---|---|---|
| Contained amount (mass%) | 0.82 | < 0.001 | < 0.001 | 0.007 | 36.8 | 0.18 | 1.2 |

### (Second carbonation reaction step)

500 mL of the obtained process discharge after removing Ca was heated, and 25.6 g of sodium carbonate (molar ratio CO₃²⁻/2Li⁺ = 1.2) was added when the liquid temperature reached 80°C. Next, the mixture was reacted at a liquid temperature of 90°C for 30 minutes. After 30 minutes, the generated precipitate (lithium carbonate) was subjected to solid-liquid separation using a suction filter to obtain a process discharge after removing Li and lithium carbonate. The obtained lithium carbonate was dried in a constant-temperature dryer at 105°C for 12 hours. Table 4 shows a chemical composition of the obtained lithium carbonate. Lithium carbonate was dissolved in a nitric acid aqueous solution having a concentration of 50%, and a chemical composition thereof was measured by ICP optical emission spectroscopy (ICAP7600 DUO manufactured by THERMO SCIENTIFIC).

**[Table 4]**

| Component | Li | Ni | Co | Mn | Ca | Na | SO₄ |
|---|---|---|---|---|---|---|---|
| Contained amount (mass%) | 17.90 | < 0.001 | < 0.001 | < 0.001 | 0.02 | 0.044 | 0.54 |

According to Inventive Example 1, it was found that high-quality lithium carbonate having a low amount of Ca could be obtained even when Ca was contained in the lithium leachate at a high concentration.

### (Inventive Example 2)

The same procedure as in Inventive Example 1 was performed except that, in the first carbonation reaction step, 1.16 g of sodium carbonate (molar ratio CO₃²⁻/Ca²⁺ = 1.0) was added to 1 L of the lithium leachate.

### (Inventive Example 3)

The same procedure as in Inventive Example 1 was performed except that, in the first carbonation reaction step, the reaction was carried out at a liquid temperature of 40°C for 30 minutes.

### (Inventive Example 4)

The same procedure as in Inventive Example 1 was performed except that, in the first carbonation reaction step, 0.58 g of sodium carbonate (molar ratio CO₃²⁻/Ca²⁺ = 0.5) was added to 1 L of the lithium leachate.

### (Inventive Example 5)

The same procedure as in Inventive Example 1 was performed except that, in the first carbonation reaction step, 11.6 g of sodium carbonate (molar ratio CO₃²⁻/Ca²⁺ = 10.0) was added to 1 L of the lithium leachate.

### (Inventive Example 6)

The same procedure as in Inventive Example 1 was performed except that, in the first carbonation reaction step, the reaction was carried out at a liquid temperature of 25°C for 30 minutes.

### (Comparative Example)

The first carbonation reaction step was not performed, and lithium carbonate was directly deposited from the lithium leachate (raw solution).

In Inventive Examples 1 to 6 and Comparative Example, Table 5 shows the chemical composition of the process discharge after removing Ca (lithium-containing liquid) obtained in the first carbonation reaction step, and the chemical composition of the finally obtained lithium carbonate. The chemical composition of the process discharge after removing Ca was measured by ICP optical emission spectroscopy (ICAP7600 DUO manufactured by THERMO SCIENTIFIC). In addition, the finally obtained lithium carbonate was dissolved in a nitric acid aqueous solution having a concentration of 50%, and the chemical composition thereof was measured by ICP optical emission spectroscopy (ICAP7600 DUO manufactured by THERMO SCIENTIFIC).

**[Table 5]**

| | First carbonation reaction step | | Composition of lithium-containing liquid | | | Second carbonation reaction step | Composition of lithium carbonate | | |
|---|---|---|---|---|---|---|---|---|---|
| | CO₃²⁻/Ca²⁺ molar ratio | Temperature °C | Li g/L | Ca g/L | Na g/L | Temperature °C | Li mass% | Ca mass% | Na mass% |
| Inventive Example 1 | 5.0 | 90 | 7.65 | 0.01 | 2.3 | 90 | 18.9 | 0.0 | 0.04 |
| Inventive Example 2 | 1.0 | 90 | 8.01 | 0.04 | 0.5 | 90 | 18.9 | 0.1 | 0.01 |
| Inventive Example 3 | 5.0 | 40 | 7.98 | 0.09 | 2.4 | 90 | 18.8 | 0.3 | 0.05 |
| Inventive Example 4 | 0.5 | 90 | 8.03 | 0.29 | 0.3 | 90 | 18.5 | 0.9 | 0.01 |
| Inventive Example 5 | 10.0 | 90 | 4.46 | 0.01 | 5.1 | 90 | 18.8 | 0.0 | 0.10 |
| Inventive Example 6 | 5.0 | 25 | 8.03 | 0.35 | 2.2 | 90 | 18.4 | 1.1 | 0.04 |
| Comparative Example | - | - | 8.04 | 0.44 | 0.1 | 90 | 18.3 | 1.3 | 0.002 |

In Comparative Example, the first carbonation reaction step was not performed, and the obtained lithium carbonate contained calcium at a high concentration.

On the other hand, in Inventive Examples 1 to 6 in which the first carbonation reaction step was performed, the concentration of calcium contained in the obtained lithium carbonate was lower than that in Comparative Example because the first carbonation reaction step was performed.

In addition, when Inventive Examples 1, 2, 4, and 5, in which the heating temperature in the first carbonation reaction step was the same (90°C) and the molar ratio CO₃²⁻/Ca²⁺ was changed, were compared, it was found that the concentration of calcium contained in the obtained lithium carbonate was even lower in Inventive Examples 1, 2, and 5, in which the molar ratio CO₃²⁻/Ca²⁺ was 1.0 or more and 10.0 or less, than that in Inventive Example 4, in which the molar ratio CO₃²⁻/Ca²⁺ was 0.5.

Further, when Inventive Examples 1, 3, and 6, in which the molar ratio CO₃²⁻ /Ca²⁺ in the first carbonation reaction step was the same (5.0) and the heating temperature was changed, were compared, it was found that the concentration of calcium contained in the obtained lithium carbonate was lower in Inventive Examples 1 and 3, in which the heating temperature was 40°C or higher and 95°C or lower, than that in Inventive Example 6, in which the heating temperature was 25°C.

### (Example 2)

A simulated liquid having the same composition as the process discharge after removing Ca obtained in Inventive Example 1 (Table 2) was prepared.

Under the conditions of Test Examples A and B below, sodium carbonate was added to the simulated liquid in an amount such that the molar ratio CO₃²⁻/2Li⁺ was 1.2, and the second carbonation reaction step S43 was performed.

Test Example A: 137.3 g of sodium carbonate was added to 2 L of the simulated liquid; at the stage of adding sodium carbonate, the temperature of the simulated liquid was set to 15°C to 25°C (room temperature); and after adding sodium carbonate, the simulated liquid was heated to 80°C.

Test Example B: 68.7 g of sodium carbonate was added to 1 L of the simulated liquid; and after heating the simulated liquid to 80°C, sodium carbonate was added.

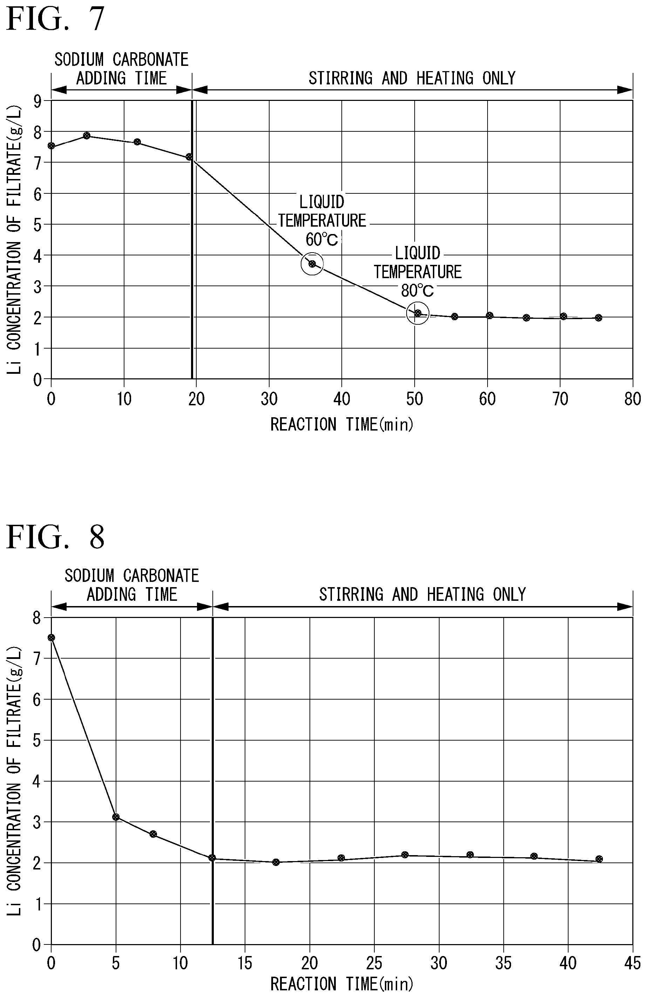

The Li concentration in the simulated liquid at each reaction time was measured. The obtained results are shown in Tables 6 and 7 and FIGS. 7 and 8.

**[Table 6]**

| Reaction time (min) | Total addition amount of sodium carbonate (g) | Li concentration of filtrate (g/L) |
|---|---|---|
| 0 | 0 | 7.49 |
| 5 | 40 | 7.83 |
| 12 | 80 | 7.61 |
| 19 | 137.3 | 7.13 |
| 36 | 137.3 | 3.69 |
| 50.5 | 137.3 | 2.11 |
| 55.5 | 137.3 | 2.00 |
| 60.5 | 137.3 | 2.01 |
| 65.5 | 137.3 | 1.96 |
| 70.5 | 137.3 | 1.99 |
| 75.5 | 137.3 | 1.94 |

**[Table 7]**

| Reaction time (min) | Total addition amount of sodium carbonate (g) | Li concentration of filtrate (g/L) |
|---|---|---|
| 0 | 0 | 7.49 |
| 5 | 27.5 | 3.10 |
| 8 | 31.4 | 2.67 |
| 12.5 | 68.7 | 2.10 |
| 17.5 | 68.7 | 2.00 |
| 22.5 | 68.7 | 2.08 |
| 27.5 | 68.7 | 2.18 |
| 32.5 | 68.7 | 2.17 |
| 37.5 | 68.7 | 2.12 |
| 42.5 | 68.7 | 2.05 |

Table 6 and FIG. 7 show the relationship between the Li concentration in the simulated liquid (filtrate) and the reaction time in Test Example A; and Table 7 and FIG. 8 show the relationship between the Li concentration in the simulated liquid (filtrate) and the reaction time in Test Example B.

In Test Example B, it was confirmed that the Li concentration rapidly decreased from the start of the addition of sodium carbonate, and lithium carbonate was generated. After the total amount of sodium carbonate was added, the Li concentration was approximately 2 g/L, and it is presumed that most of the Li in the simulated liquid was lithium carbonate.

In Test Example A, it was confirmed that the Li concentration hardly changed at the stage of adding sodium carbonate, and lithium carbonate was hardly generated at this stage. However, when the simulated liquid was heated after adding the total amount of sodium carbonate, the Li concentration decreased. In particular, it was confirmed that the Li concentration decreased from a stage at which the liquid temperature was low, and lithium carbonate was generated. When 50 minutes of the reaction time had elapsed, the Li concentration was approximately 2 g/L, and it is presumed that most of the Li in the simulated liquid was lithium carbonate.

In Test Example A, it was found that the Li concentration decreased from a stage at which the liquid temperature was low, and lithium carbonate was generated, as compared with Test Example B.

### (Example 3)

A solution and a process discharge after removing Ca having the compositions shown in Tables 8 and 9 were prepared. Table 8 shows the composition of the solution used in Test Examples 1 to 4 and 8 to 11. The solution in Table 8 was produced by dissolving commercially available lithium sulfate in sulfuric acid so that the Li concentration was the same as that of the lithium-concentrated liquid obtained in the lithium-containing liquid concentration step S03. Elements other than Li and SO₄, such as Ca, shown in Table 8 were impurities contained in the commercially available lithium sulfate. Table 9 shows the composition of the process discharge after removing Ca used in Test Examples 5 to 7.

In Test Examples 1 to 4 and 8 to 11, the effect of the form of sodium carbonate to be added, the temperature at the time of adding sodium carbonate, and the addition rate of sodium carbonate on the amount of impurities in the generated lithium carbonate was investigated using the solution having the composition shown in Table 8.

**[Table 8]**

| Solution used in Test Examples 1 to 4 and 8 to 11 | | | | | | | | | |
|---|---|---|---|---|---|---|---|---|---|
| Component | Li | Ni | Co | Mn | Zn | Al | Ca | Na | SO₄ |
| Concentration (g/L) | 20.0 | < 0.001 | < 0.001 | < 0.001 | < 0.001 | < 0.001 | 0.002 | 0.003 | 125 |

**[Table 9]**

| Process discharge after removing Ca used in Test Examples 5 to 7 | | | | | | | | |
|---|---|---|---|---|---|---|---|---|
| Component | Li | Ni | Co | Mn | Al | Ca | Na | SO₄ |
| Concentration (g/L) | 8.04 | < 0.001 | < 0.001 | < 0.001 | 0.001 | 0.007 | 4.49 | 58 |

Under the conditions shown in Table 10, sodium carbonate was added to 1 L of the solution and the process discharge after removing Ca, and the second carbonation reaction step was performed.

The form of sodium carbonate was powder or slurry.

In Test Examples 5 to 8, 10, and 11, at the stage of adding sodium carbonate, the temperature of the solution or the process discharge after removing Ca was set to 15°C to 25°C (room temperature), and the solution or the process discharge after removing Ca was heated to 80°C after the addition of sodium carbonate. In Test Examples 1 to 4 and 9, the solution or the process discharge after removing Ca was heated to 80°C, and then sodium carbonate was added.

The addition rate of sodium carbonate (amount added per second with respect to 8 g of Li in the lithium-concentrated liquid) and the addition amount of sodium carbonate (ratio of the number of moles of the amount of sodium carbonate to be added to twice the number of moles of the amount of Li (CO₃²⁻/2Li⁺)) were adjusted to the values shown in Table 10.

The generated precipitate (lithium carbonate) was subjected to solid-liquid separation using a suction filter to obtain a process discharge after removing Li and lithium carbonate. The obtained lithium carbonate was dried in a constant-temperature dryer at 105°C for 12 hours. Lithium carbonate was dissolved in a nitric acid aqueous solution having a concentration of 50%, and a chemical composition thereof was measured by ICP optical emission spectroscopy (ICAP7600 DUO manufactured by THERMO SCIENTIFIC).

A chemical composition of the obtained lithium carbonate is shown in Table 10. In Table 10, "-" means that the concentration of the element was not measured.

From the results of Test Examples 1 to 4, it was found that, in a case where the addition rate of sodium carbonate was 1 g/s or less, the amounts of Na and SO₄²⁻ in the lithium carbonate were relatively low as compared with a case where the addition rate of sodium carbonate was more than 1 g/s.

From the results of Test Examples 5 to 7, it was found that, as the ratio (CO₃²⁻ /2Li⁺) of the amount (number of moles) of carbonate ions (CO₃²⁻) in sodium carbonate to twice the amount (number of moles) of lithium ions contained in the process discharge after removing Ca became larger, the amounts of Ca and Al in the lithium carbonate were reduced.

From the results of Test Examples 8 and 9, it was found that, in a case where the temperature of the solution was set to 15°C to 25°C (room temperature) at the stage of adding sodium carbonate, the amounts of Na and SO₄²⁻ in the lithium carbonate were smaller than those in a case where sodium carbonate was added after heating the solution to 80°C.

From Test Examples 10 and 11, it was found that, in a case where the form of sodium carbonate to be added was powder, the amounts of Na and SO₄²⁻ in the lithium carbonate were smaller than those in a case where the form of sodium carbonate to be added was slurry.

**[Table 10]**

| Test Example | Form of sodium carbonate | Temperature when sodium carbonate is added | Addition rate of sodium carbonate (g/s) | Addition amount of sodium carbonate (molar ratio CO₃²⁻ /2Li⁺) | Amount of each element contained in lithium carbonate (mass%) | | | | |
|---|---|---|---|---|---|---|---|---|---|
| | | | | | Li | Na | SO₄ | Ca | Al |
| 1 | Powder | 80°C | 0.480 | 1.2 | 18.2 | 0.472 | 1.03 | - | - |
| 2 | Powder | 80°C | 5.100 | 1.2 | 17.8 | 0.595 | 1.51 | - | - |
| 3 | Powder | 80°C | 10.200 | 1.2 | 17.3 | 1.020 | 2.16 | - | - |
| 4 | Powder | 80°C | 36.600 | 1.2 | 16.4 | 3.780 | 7.08 | - | - |
| 5 | Powder | Normal temperature | 0.060 | 1.0 | 18.7 | 0.211 | 0.78 | 0.01530 | 0.00150 |
| 6 | Powder | Normal temperature | 0.070 | 1.2 | 18.9 | 0.290 | 0.79 | 0.01190 | 0.00024 |
| 7 | Powder | Normal temperature | 0.085 | 1.5 | 18.4 | 0.246 | 0.69 | 0.00878 | 0.00017 |
| 8 | Slurry | Normal temperature | 0.260 | 1.2 | 18.7 | 0.117 | 0.93 | - | - |
| 9 | Slurry | 80°C | 0.290 | 1.2 | 19.3 | 0.129 | 1.79 | - | - |
| 10 | Powder | Normal temperature | 0.100 | 1.2 | 18.1 | 0.360 | 1.07 | - | - |
| 11 | Slurry | Normal temperature | 0.102 | 1.2 | 18.6 | 0.492 | 2.79 | - | - |

As a result of the above-described confirmation experiments, it was found that, according to the present invention, a method for producing lithium carbonate can be provided, the method being capable of suppressing mixing of calcium carbonate when lithium carbonate is produced from a lithium-containing liquid and obtaining highly pure lithium carbonate.

### INDUSTRIAL APPLICABILITY

The method for producing lithium carbonate according to the present embodiment is suitably applicable to a step of recovering lithium from a lithium-containing substance such as a pulverized product of a lithium-ion battery.

### REFERENCE SIGNS LIST

S04 Lithium carbonate production step
S41 First carbonation reaction step
S42 First solid-liquid separation step
S43 Second carbonation reaction step
S44 Second solid-liquid separation step

## Claims

1. A method for producing lithium carbonate, comprising:
a first carbonation reaction step of generating calcium carbonate by adding a soluble carbonate compound to a lithium-containing liquid in which calcium ions coexist and heating the lithium-containing liquid;
a first solid-liquid separation step of separating the calcium carbonate generated in the first carbonation reaction step from the lithium-containing liquid;
a second carbonation reaction step of generating lithium carbonate by adding a soluble carbonate compound to the lithium-containing liquid separated in the first solid-liquid separation step and heating the lithium-containing liquid; and
a second solid-liquid separation step of separating the lithium carbonate generated in the second carbonation reaction step from a mother liquor.

2. The method for producing lithium carbonate according to Claim 1,
wherein an amount of substance of the soluble carbonate compound added in the first carbonation reaction step and an amount of substance of calcium in the lithium-containing liquid supplied in the first carbonation reaction step are within a range of 1.0 or more and 10.0 or less in terms of a stoichiometric ratio (CO₃²⁻/Ca²⁺).

3. The method for producing lithium carbonate according to Claim 1 or 2,
wherein a pH in the first carbonation reaction step is 9.0 or more and 11.0 or less.

4. The method for producing lithium carbonate according to Claim 1 or 2,
wherein the soluble carbonate compound added in the first carbonation reaction step and the second carbonation reaction step is sodium carbonate.

5. The method for producing lithium carbonate according to Claim 1 or 2,
wherein a heating temperature in the first carbonation reaction step is within a range of 40°C or higher and 95°C or lower.

6. The method for producing lithium carbonate according to Claim 1 or 2,
wherein a heating temperature in the second carbonation reaction step is within a range of 80°C or higher and 95°C or lower.

7. The method for producing lithium carbonate according to Claim 1 or 2,
wherein a carbonate compound containing the calcium carbonate recovered in the first solid-liquid separation step is returned to the first carbonation reaction step.
